# EUROPÄISCHE PATENTSCHRIFT

(11) **EP 0 849 032 B1**
(45) Veröffentlichungstag und Bekanntmachung des Hinweises auf die Patenterteilung: **12.09.2001**
(21) Anmeldenummer: 97120407.8
(22) Anmeldetag: 21.11.1997
(51) Int. Cl.: B23Q 16/00, B23Q 35/02

(54) **Verfahren zur Bearbeitung eines Werkstückes in einer Bearbeitungsstation mit einem Industrieroboter**
Process for machining a workpiece in a processing station with a robot
Procédé d'usinage d'une piece dans un porte de travail avec un robot

(30) Priorität: 17.12.1996 DE 19652465
(43) Veröffentlichungstag der Anmeldung: 24.06.1998
(73) Patentinhaber: Bayerische Motoren Werke Aktiengesellschaft, 80788 München (DE)
(72) Erfinder: Steinbichler, Rainer, 85716 Unterschleissheim (DE); Gross, Johann, 81475 München (DE); Hense, Paul, 85764 Oberschleissheim (DE)

(56) Entgegenhaltungen:
- EP-A- 0 753 379
- WO-A-89/11434
- DE-A- 2 445 559
- DE-A- 3 516 782
- DE-A- 3 531 988
- DE-A- 4 039 345
- US-A- 5 056 964

## Beschreibung

Die Erfindung bezieht sich gemäß dem Oberbegriff des Patentanspruches 1 auf ein Verfahren zur Bearbeitung eines Werkstückes in einer Bearbeitungsstation mit einem Industrieroboter, bei dem das Werkstück von einem mehrachsigen Industrieroboter mittels einer Greifeinrichtung aus einer Bereitstellungsanordnung einer Bearbeitungsmaschine zugeführt wird und das Werkstück während der Bearbeitung unter Verbleib an der mit dem Roboter verbundenen Greifeinrichtung mittels Zapfen-/Bohrungs-Paarungen zwischen dem Werkstück und/oder der Greifeinrichtung und einer Positionier-Vorrichtung relativ zur Bearbeitungsmaschine in Position gehalten und mittels des Roboters auf Anschlag an der Positionier-Vorrichtung fixiert wird. Ein solches Verfahren wird in DE-A-2 445 559 beschrieben.

Bei dem in der DE-A-195 25 701 vorgeschlagenen Verfahren zur Bearbeitung eines Werkstückes in einer Bearbeitungsstation mit Hilfe eines Industrieroboters wurde für ein Werkstück mit unterschiedlichen Bearbeitungsbildern vorgeschlagen, daß entsprechend jedem Bearbeitungsbild eine Bearbeitungsmaschine mit fest angeordneten, gesonderten Bearbeitungseinheiten mit einzeln betreibbaren Werkzeugspindeln vorgesehen wird.

Der Erfindung liegt die Aufgabe zugrunde, das gattungsgemäße Verfahren zur Bearbeitung eines Werkstückes mit einem sich im wesentlichen mehrfach wiederholenden Bearbeitungsbild derart zu vereinfachen, daß ein reduzierter Aufwand an Bearbeitungsmaschinen erzielt ist.

Diese Aufgabe ist gemäß dem Patentanspruch 1 gelöst und zwar dadurch, daß das Werkstück mit einem sich im wesentlichen mehrfach wiederholenden Bearbeitungsbild - insbesondere Lochreihen - mit einer einem einzigen Bearbeitungsbild entsprechenden Vielzahl von Bearbeitungseinheiten mit verstellbaren Werkzeugspindeln bearbeitet wird, und daß das Werkstück relativ zu den in der Bearbeitungsmaschine lagefixierten Bearbeitungseinheiten mittels des Roboters von einer Bearbeitungs-Position Zapfen/Bearbeitungsbild der Positionier-Vorrichtung zur nächsten Bearbeitungs-Position Zapfen/Bearbeitungsbild versetzt und fixiert wird.

Mit der Erfindung erübrigt sich eine aufwendige Sondermaschine mit mehreren Reihen von fixierten Bearbeitungseinheiten, weiter erübrigt sich auch eine Sondermaschine mit nur einer Reihe von Bearbeitungseinheiten, die entsprechend dem Bearbeitungsbild gemeinsam hubverstellbar sind.

Zur vorteilhaften Erweiterung des erfindungsgemäßen Verfahrens wird in weiterer Ausgestaltung vorgeschlagen, daß eine in der Bearbeitungsmaschine äußerst plazierte Bearbeitungseinheit der zusätzlichen Bearbeitung des mittels des Roboters geschwenkten Werkstückes in einem weiteren Bereich - z.B. Stirnseite - dient, wobei das Werkstück und/oder die Greifeinrichtung mit der Positionier-Vorrichtung einseitig über mehrere, den übrigen Bearbeitungs-Positionen dienende Zapfen/Bohrungs-Paarungen gekoppelt wird zur stabilen Positionierung und Fixierung relativ zur Bearbeitungsmaschine.

Damit kann die im Aufbau erfindungsgemäß einfache Bearbeitungsmaschine in vorteilhafter Weise zur Bearbeitung mehrerer Seiten des Werkstückes benutzt werden, wobei bei abweichendem Bearbeitungsbild an entsprechender Stelle die jeweilige Bearbeitungseinheit nicht in Betrieb gesetzt wird.

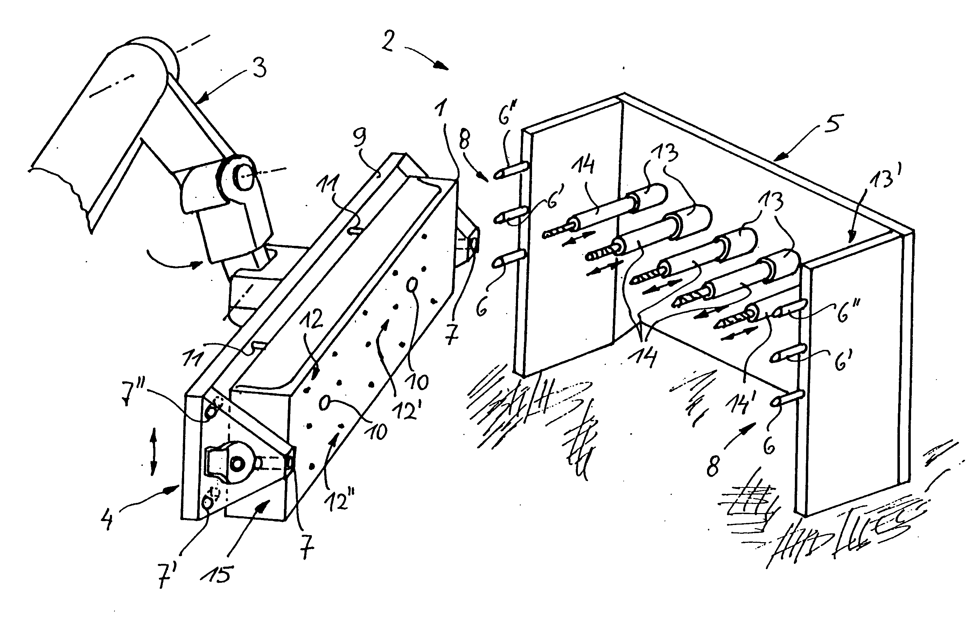

Die Erfindung ist anhand eines in der Zeichnung schematisch dargestellten Beispiels beschrieben.

Zur Bearbeitung eines Werkstückes 1 in einer Bearbeitungsstation 2 mit einem mehrachsigen Industrieroboter 3 ist dieser mit einer Greifeinrichtung 4 ausgerüstet zur Aufnahme und Verbringung eines Werkstückes 1 aus einer nicht gezeigten Bereitstellungsanordnung zu einer Bearbeitungsmaschine 5. Das Werkstück 1 wird während der Bearbeitung unter Verbleib an der mit dem Roboter 3 verbundenen Greifeinrichtung 4 mittels Zapfen-/Bohrungs-Paarungen zwischen dem Werkstück 1 und der Greifeinrichtung 4 einerseits und mittels Zapfen-/Bohrungs-Paarungen 6, 7 zwischen der Greifeinrichtung 4 und einer Positionier-Vorrichtung 8 relativ zur Bearbeitungsmaschine 5 in Position gehalten und mittels des Roboters 3 auf Anschlag an der Positionier-Vorrichtung 8 fixiert.

Die Positionierung des Werkstückes 1 relativ zu einer Grundplatte 9 der Greifeinrichtung 4 kann über gesteuert betätigte, in Hilfs-Paßbohrungen 10 des Werkstückes 1 zur Klemmhalterung eingreifende, nicht gezeigte Spannzangen erfolgen, wobei das Werkstück 1 über Distanzstücke 11 von der Grundplatte 9 beabstandet gehalten ist zur freien Spanabfuhr.

Zur Vereinfachung des Bearbeitungs-Verfahrens bei im Aufbau einfacher Bearbeitungsmaschine 5 wird erfindungsgemäß für ein Werkstück 1 mit einem sich im wesentlichen mehrfach wiederholenden Bearbeitungsbild, wie z.B. mehreren Lochreihen 12, 12', 12" mit identischen Durchmessern erfindungsgemäß vorgeschlagen, daß das Werkstück 1 mit einer einem einzigen Bearbeitungsbild entsprechenden Vielzahl von Bearbeitungseinheiten 13 mit vorschubverstellbaren Werkzeugspindeln 14 bearbeitet wird, wobei das Werkstück 1 relativ zu den in der Bearbeitungsmaschine 5 lagefixierten Bearbeitungseinheiten 13 mittels des Roboters 3 von einer Bearbeitungs-Position - Zapfen/Lochreihe 6, 12 bzw. 6', 12' bzw. 6", 12" - der Positionier-Vorrichtung 8 zur nächsten Bearbeitungs-Position - Zapfen/Lochreihe 6', 12' und 6", 12" - versetzt und fixiert wird.

Weiter wird zur erfindungsgemäßen Mehrfachnutzung der Bearbeitungsstation 2 vorgeschlagen, daß eine in der Bearbeitungsmaschine 5 äußerst plazierte Bearbeitungseinheit 13' der zusätzlichen Bearbeitung des mittels des Roboters 3 geschwenkten Werkstückes 1 in einem weiteren Bereich, vorzugsweise der Stirnseite 15 dient, wobei die Greifeinrichtung 4 mit der Positionier-Vorrichtung 8 einseitig über mehrere den übrigen Bearbeitungs-Positionen 12 und 12" dienende Zapfen/Bohrungs-Paarungen 6, 6" und 7', 7" gekuppelt wird zur stabilen Positionierung und Fixierung an der Bearbeitungsmaschine 5.

## Patentansprüche

1. Verfahren zur Bearbeitung eines Werkstückes in einer Bearbeitungsstation mit einem Industrieroboter,
- bei dem das Werkstück (1) von einem mehrachsigen Industrieroboter (3) mittels einer Greifeinrichtung (4) aus einer Bereitstellungsanordnung einer Bearbeitungsmaschine (5) zugeführt wird, und
- das Werkstück (1) während der Bearbeitung unter Verbleib an der mit dem Roboter (3) verbundenen Greifeinrichtung (4) mittels Zapfen-/Bohrungs-Paarungen (6, 7) zwischen dem Werkstück (1) und/oder der Greifeinrichtung (4) und einer Positionier-Vorrichtung (8) relativ zur Bearbeitungsmaschine (5) in Position gehalten und
- mittels des Roboters (3) auf Anschlag an der Positionier-Vorrichtung (8) fixiert wird,
**dadurch gekennzeichnet**,
- daß das Werkstück (1) mit einem sich im wesentlichen mehrfach wiederholenden Bearbeitungsbild - insbesondere Lochreihen (12, 12', 12") - mit einer einem einzigen Bearbeitungsbild entsprechenden Vielzahl von Bearbeitungseinheiten (13, 13') mit vorschubverstellbaren Werkzeugspindeln (14, 14') bearbeitet wird, und
- daß das Werkstück (1) relativ zu den in der Bearbeitungsmaschine (5) lagefixierten Bearbeitungseinheiten (13, 13') mittels des Roboters (3) von einer Bearbeitungs-Position Zapfen/Bearbeitungsbild (6, 12; 6', 12; 6", 12") der Positionier-Vorrichtung (8) zur nächsten Bearbeitungs-Position Zapfen/Bearbeitungsbild (6', 12; 6", 12") versetzt und fixiert wird.

2. Verfahren nach Anspruch 1, **dadurch gekennzeichnet**
- daß eine in der Bearbeitungsmaschine (5) äußerst plazierte Bearbeitungseinheit (13') der zusätzlichen Bearbeitung des mittels des Roboters (3) geschwenkten Werkstückes (1) in einem weiteren Bereich - z.B. Stirnseite (15) - dient, wobei
- das Werkstück (1) und/oder die Greifeinrichtung (4) mit der Positionier-Vorrichtung (8) einseitig über mehrere, den übrigen Bearbeitungs-Positionen dienende Zapfen-/Bohrungs-Paarungen (6 und 7', 6" und 7") gekuppelt wird zur stabilen Positionierung und Fixierung an der Bearbeitungsmaschine (5).

## Claims

1. A method of processing a workpiece in a processing station, using an industrial robot,
- wherein a multi-axis industrial robot (3) using a gripper device (4) moves the workpiece (1) from a standby arrangement to a processing machine (5) and
- during processing the workpiece (1) remains on the gripper device (4) connected to the robot (3) and is held in position relative to the processing machine (5) by paired pins and bores (6, 7) between the workpiece (1) and/or the gripper (4) and by a positioning device (8) and is fixed by the robot (3) so that it abuts the positioning device (8),
**characterised in that**
- the workpiece (1) is processed in accordance with a substantially multiple-repeating processing pattern, especially rows of perforations (12, 12', 12"), using a number of processing units (13, 13') corresponding to a single processing pattern and with adjustable-advance workpiece spindles (14, 14'), and
- the workpiece (1), relative to the processing units (13, 13') fixed in position in the processing machine (5), is moved by the robot (3) from a processing position/pin/processing pattern (6, 12; 6', 12'; 6", 12") of the positioning device (8) to the next processing position/pin/processing pattern (6', 12', 6", 12") and fixed.

2. A method according to claim 1, **characterised in that**
- a processing unit (13') placed outermost in the processing machine (5) is used for additionally processing a further region (e.g. end face 15), of the workpiece (1) pivoted by the robot (3), wherein
- the workpiece (1) and/or the gripper device (4) is coupled to the positioning device (8) on one side via a number of paired pins and bores (6 and 7', 6" and 7") serving the other processing positions, for stable positioning and fixing to the processing machine (5).

## Revendications

1. Procédé d'usinage d'une pièce dans une station d'usinage utilisant un robot industriel, selon lequel :
- la pièce (1) est amenée à une machine d'usinage (5) par un robot industriel (3) multi-axes équipé d'un dispositif de prise (4) qui l'extrait d'un système de mise à disposition,
- la pièce (1) pendant l'usinage au cours duquel elle demeure dans le dispositif de prise (4) relié au robot (3), est maintenue en position par rapport à la machine d'usinage (5), par des couples broche/alésage (6, 7) entre la pièce (1) et/ou le dispositif de prise (4) et un dispositif de positionnement (8), et
- est fixée en butée sur le dispositif de positionnement (8),
**caractérisé en ce que**
- la pièce (1) comportant une image d'usinage se répétant plusieurs fois, notamment des rangées de trous (12, 12', 12"), est usinée par des unités d'usinage (13, 13') en nombre correspondant à une seule image d'usinage et équipées de broches porte-outils (14, 14') à course réglable, et
- le robot (3) déplace et fixe la pièce (1) par rapport aux unités d'usinage (13, 13') montées fixes dans la machine d'usinage (5), pour la faire passer d'une position d'usinage broche/image d'usinage (6, 12 ; 6', 12'; 6", 12") du dispositif de positionnement (8) à la position d'usinage suivante broche/image d'usinage (6', 12' ; 6", 12").

2. Procédé selon la revendication 1,
**caractérisé en ce qu'**
- une unité d'usinage (13') placée vers l'extérieur dans la machine (5) sert à effectuer un usinage supplémentaire de la pièce (1) basculée par le robot (3) dans une autre partie de celle-ci, par exemple une face frontale (15),
- la pièce (1) et/ou le dispositif de prise (4) étant accouplé d'un côté au dispositif de positionnement (8) par plusieurs couples broche/alésage (6 et 7' ; 6" et 7") servant aux positions d'usinage restantes, pour assurer un positionnement stable et la fixation sur la machine d'usinage (5).
